# EUROPÄISCHE PATENTSCHRIFT

(11) **EP 0 847 793 B1**
(45) Veröffentlichungstag und Bekanntmachung des Hinweises auf die Patenterteilung: **12.04.2006**
(21) Anmeldenummer: 97121271.7
(22) Anmeldetag: 04.12.1997
(51) Int. Cl.: B01D 53/32, F01N 3/08

(54) **Vorrichtung zur NOx-Entfernung aus dem Abgas von Verbrennungsmotoren**
Device for removing NOx from engine exhaust gas
Dispositif pour l'élimination de NOx dans l'échappement de moteurs

(30) Priorität: 11.12.1996 DE 19651492
(43) Veröffentlichungstag der Anmeldung: 17.06.1998
(73) Patentinhaber: EADS Deutschland GmbH, 85521 Ottobrunn (DE)
(72) Erfinder: Nitschke, Felex, Dr., 81731 München (DE); Wind, Jörg, Dr., 85757 Karlsfeld (DE)

(56) Entgegenhaltungen:
- US-A- 4 246 081
- US-A- 5 009 763

## Beschreibung

Die Emission von Stickoxiden (NOₓ) von Verbrennungskraftmaschinen, speziell solchen, die im Straßenverkehr eingesetzt werden, stellt eine erhebliche Umweltbelastung dar, die durch einschlägige Gesetze immer stärker beschränkt wird. Während Ottomotoren mit Dreiwege-Katalysator, die mit einem Kraftstoff-Luftgemisch von Lambda = 1 betrieben werden, alle derzeitigen Vorschriften erfüllen, ist dies für die vom Kraftstoffverbrauch her wesentlich günstigeren Diesel- und Otto-Mager-Motoren wegen des hohen Luftüberschusses bei der Verbrennung nicht der Fall. Hier ist eine spezielle NOₓ-Entfernung erforderlich. Dazu werden sog. Denox-Katalysatoren verwendet, die jedoch nur einen Umwandlungsgrad von max. 50 % erreichen.

Aus US 4,246,081 ist ein Verfahren zum elektrochemischen Entfernen von Schwefelgasen aus einer Gasmischung hoher Temperatur bekannt, wobei ein zwischen Elektroden angeordneter Elektrolyt verwendet wird.

Daneben ist in US 5,009,763 eine Vorrichtung und ein Verfahren zur Reduktion und Oxidation von Bestandteilen eines Fluids offenbart. Die Vorrichtung umfasst eine Honigwaben-ähnliche Struktur aus einer Sauerstoffionen leitenden Keramik, die zumindest einen Durchlass aufweist. Der Durchlass ist mit einer porösen bipolaren Elektrode beschichtet und poröse Elektroden sind außerhalb des Durchlasses an der Keramikstruktur ausgebildet, wobei die Elektrode innerhalb des Durchlasses zwischen den äußeren Elektroden angeordnet ist. Wenn eine Spannung an die äußeren Elektroden angelegt wird, werden reduzierbare und oxidierbare Bestandteile in einem Fluid, welches über die Durchlasselektrode läuft, oxidiert und reduziert.

Aufgabe der Erfindung ist es, eine wirksame, zuverlässige, einfach und kompakt aufgebaute Vorrichtung zur NOₓ-Entfernung aus dem Abgas von Kraftfahrzeugen mit Verbrennungsmotoren bereitzustellen.

Dies wird erfindungsgemäß mit der im Anspruch 1 gekennzeichneten Vorrichtung erreicht.

In den unteransprüchen 2 bis 17 sind vorteilhafte Ausgestaltungen der erfindungsgemäßen vorrichtung, und in den Ansprüchen 18 und 19 bevorzugte Verwendungsmöglichkeiten der erfindungsgemäßen Vorrichtung angegeben.

In der erfindungsgemäßen Vorrichtung erfolgt also eine Absorption von NOₓ zu Nitrat und Nitrit und dann eine elektrochemische Zersetzung des Nitrats bzw. Nitrits. NOₓ besteht im wesentlichen aus NO und NO₂. Am Beispiel des NO₂ und des Nitrats laufen also in der erfindungsgemäßen Vorrichtung folgende Reaktionen ab:
1. Absorption:

   2 NO₂ + Na₂CO₃ => NaNO₂ + NaNO₃ + CO₂ (1)
2. Elektrochemische Zersetzung (Beispiel Nitrat):

   Kathode: 10 e- + 2 NaNO₃ + 6 CO₂ => Na₂CO₃ + N₂ + 5 CO₃²⁻ Anode: 5 CO₃²⁻ => 5 CO₂ + 5/2 O₂ + 10 e- (2)

Der flüssige alkalische Elektrolyt besteht vorzugsweise aus einer Salzschmelze, insbesondere aus einem ternären Gemisch der Carbonate von Lithium, Natrium und Kalium. Im Eutektikum, also mit etwa 43 Mol-% Lithiumcarbonat, 31 Mol-% Natriumcarbonat und 25 Mol-% Kaliumcarbonat schmilzt dieses Gemisch bei etwa 400°C und ist bis über 1000°C stabil, ohne sich zu zersetzen.

Da die Temperatur des Abgases eines Verbrennungsmotors unter normalen Betriebsbedingungen wesentlich über 400°C und deutlich unter 1000°C liegt, wird das Salzgemisch durch die Temperatur der Abgase in den geschmolzenen Zustand übergeführt und im geschmolzenen Zustand gehalten.

Wie festgestellt werden konnte, diffundiert NOₓ jedoch auch in das feste Salzgemisch, so daß auch im kalten Zustand des Motors NOₓ aus dem Abgas durch das Salzgemisch entfernt wird.

Otto-Mager-Motoren und Dieselmotoren führen wegen des hohen Luftüberschusses bei der Verbrennung zu einem besonders hohen NOₓ-Gehalt im Abgas. Andererseits weist das Abgas dieser Motoren aufgrund des hohen Luftüberschusses auch im Normalbetriebszustand des Motors eine relativ niedrige Temperatur auf. Demgemäß können erfindungsgemäß auch andere, tiefer schmelzende eutektische Gemische eingesetzt werden, beispielsweise ein eutektisches Gemisch aus Alkali- oder Erdalkalimetallcarbonaten mit Alkali- oder Erdalkalinitraten oder -nitriten.

Durch den Absorberkörper erstrecken sich Gaskanäle, in die das zu reinigende NOₓ-haltige Abgas eintritt und die es gereinigt verläßt. Die Zahl und der Durchmesser der Gaskanäle ist so bemessen, daß einerseits das NOₓ möglichst quantitativ absorbiert wird, andererseits die Erhöhung des Strömungswiderstandes in Grenzen gehalten wird.

Damit der Absorberkörper mit dem flüssigen alkalischen Elektrolyt getränkt wird, ist er porös ausgebildet, und zwar vorzugsweise als Sinterkörper. Die Porengröße des Absorberkörpers ist dabei so bemessen, daß eine möglichst große Menge des Elektrolyt durch Kapillarkräfte gehalten wird. Normalerweise sollte die mittlere Porengröße des Absorberkörpers 10 µm nicht überschreiten.

Die Poren des Absorberkörpers können ganz oder teilweise mit dem geschmolzenen Elektrolyt gefüllt sein. Bei teilweiser Füllung bildet der Elektrolyt vorzugsweise einen Film an der Porenwand. Damit wird eine große Absorptionsfläche für NOₓ aus dem Abgas gebildet. Der Absorberkörper muß neben den teilweise gefüllten Poren für den Gastransport auch eine für den Transport des flüssigen Elektrolyten geeignete Porösität besitzen.

Vorzugsweise weist der Absorberkörper deshalb eine bimodale Struktur auf, d.h., er besitzt einerseits relativ große Poren für den Gastransport und andererseits kleine Poren, durch die eine konfluente, zusammenhängende Elektrolytphase zwischen den Gaskanälen und den großen Gastransportporen einerseits und den Elektroden andererseits gebildet wird.

Eine solche bimodale Porenstruktur kann beispielsweise durch Sintern von Teilchen erhalten werden, die ihrerseits eine Mikroporenstruktur aufweisen, also beispielsweise ihrerseits durch Sintern von Teilchen wesentlich kleinerer Größe hergestellt worden sind, die dann zerkleinert worden sind.

Die mittlere Porösität dieser zum Sintern verwendeten Teilchen kann beispielsweise 0,05 µm bis 1 µm betragen, während die Poren, die nach dem Sintern dieser Teilchen mit Mikroporösität entstehen, eine Größe von beispielsweise 5 µm bis 20 µm besitzen können.

Es sind mehere Ausführungsformen des porösen Absorberkörpers möglich.

Bei einer ersten Ausführungsform besteht der Absorberkörper aus einer elektrisch nicht leitenden Keramik, wobei sich die Elektroden z.B. in Form von Stäben in den porösen Absorberkörper erstrecken. Bei einer anderen Ausführungsform werden zur Bildung der Elektrodenschichten, z.B. aufeinandergestapelte Platten aus porösen Elektrodenmateralien verwendet, wobei die Elektrodenmaterialschichten bzw. -platten die vom Abgas durchströmten Gaskanäle aufweisen und zwischen den Elektrodenmaterialschichten bzw. -platten elektrisch nicht leitende poröse Trennschichten angeordnet sind.

Bei der ersten Ausführungsform besteht der Absorberkörper vorzugsweise aus Lithiumaluminat. Es kann auch Aluminiumoxid verwendet werden, das durch den Kontakt mit einem lithiumhaltigen Elektrolytsalz zumindest teilweise in Lithiumaluminat umgesetzt wird. Stattdessen ist auch die Verwendung von Ceroxid, oder Zirkonoxid, ggf. in lithiierter Form zur Herstellung des Absorberkörpers möglich, oder von Lithiumzirkonat oder von einem anderen elektrisch nicht leitenden Material, das einerseits gegenüber dem geschmolzenen Elektrolyten beständig und andererseits sinterbar ist.

Bei der ersten Ausführungsform können die Elektroden aus einem kompakten Material bestehen oder ihrerseits durch Sinterkörper gebildet werden. Sinterkörper besitzen dabei den Vorteil, daß sie eine größere Oberfläche besitzen und damit zu einem größeren Umsatz führen, also die Baugröße der erfindungsgemäßen Vorrichtung kleiner gehalten werden kann.

Das Elektrodenmaterial muß dabei gegenüber der Elektrolytschmelze stabil sein und eine geringe Polarisation besitzen sowie ggf. sinterfähig sein.

Vorzugsweise wird als Elektrodenmaterial lithiiertes Nikkeloxid verwendet. Im Falle einer gesinterten Elektrode kann beispielsweise ein aus Nickelpulver gesinterte Stab zu Nickeloxid oxidiert und anschließend lithiiert werden, wobei die Lithiierung ggf. auch während des Betriebs der Vorrichtung erfolgen kann. Statt mit Lithium dotiertem Nikkeloxid können als Elektrodenmaterial auch Lithiummetallite verwendet werden, beispielsweise Lithiumferrit, Lithiummanganit oder Lithiumcobaltit. Auch ist der Einsatz von Edelmetallen, wie Gold oder Platinmetallen, für das Elektrodenmaterial möglich, im allgemeinen jedoch zu unwirtschaftlich.

Die in dem alkalischen Elektrolyt gebildeten Nitrate und Nitrite gelangen aufgrund des Konzentrationsunterschiedes zwischen dem Bereich des Absorberkörpers, an dem das NOₓ absorbiert wird, und dem Bereich der Elektroden, also der chemischen Zersetzung des Nitrats und Nitrits, durch Diffusion sowie aufgrund der Temperaturunterschiede zwischen diesen beiden Bereichen durch Konvektion zu den Elektroden bzw. zu dem Bereich der elektrochemischen Zersetzung.

Die Elektroden werden durch Anlegen einer Spannung aus dem Bordnetz (Batterie, Lichtmaschine) des Kraftfahrzeuges auf das Zersetzungspotential des Nitrats und Nitrits vorpolarisiert. Die angelegte Spannung soll dabei das Zersetzungspotential des Nitrats und Nitrits zwar erreichen, jedoch nicht wesentlich übertreffen. Damit kann das System selbstregelnd ausgebildet werden, d.h. alle an der Elektrode ankommenden Nitrate und Nitrite werden zersetzt, ansonsten fließt jedoch kein Strom.

Anstatt mit einer externen Stromquelle kann das elektrochemische Potential auch durch Lokalelemente erzeugt werden, also durch Einsatz unterschiedlicher Elektrodenmateralien, deren Kontaktspannung zur chemischen Zersetzung des Nitrats und Nitrits führt.

Nachstehend ist die Erfindung anhand der beigefügten Zeichnung beispielsweise näher erläutert.

Darin zeigen:
- Fig. 1: einen Querschnitt durch eine erste Ausführungsform der Vorrichtung;
- Fig. 2: eine vergrößerte Darstellung eines Teils der Vorrichtung nach Fig. 1;
- Fig. 3: eine stark vergrößerte Darstellung eines Teils der Vorrichtung nach Fig. 1 und 2;
- Fig. 4: einen Querschnitt durch eine zweite Ausführungsform der Vorrichtung; und
- Fig. 5: eine schematische Ansicht der Abgasnachbehandlung eines Verbrennungsmotors.

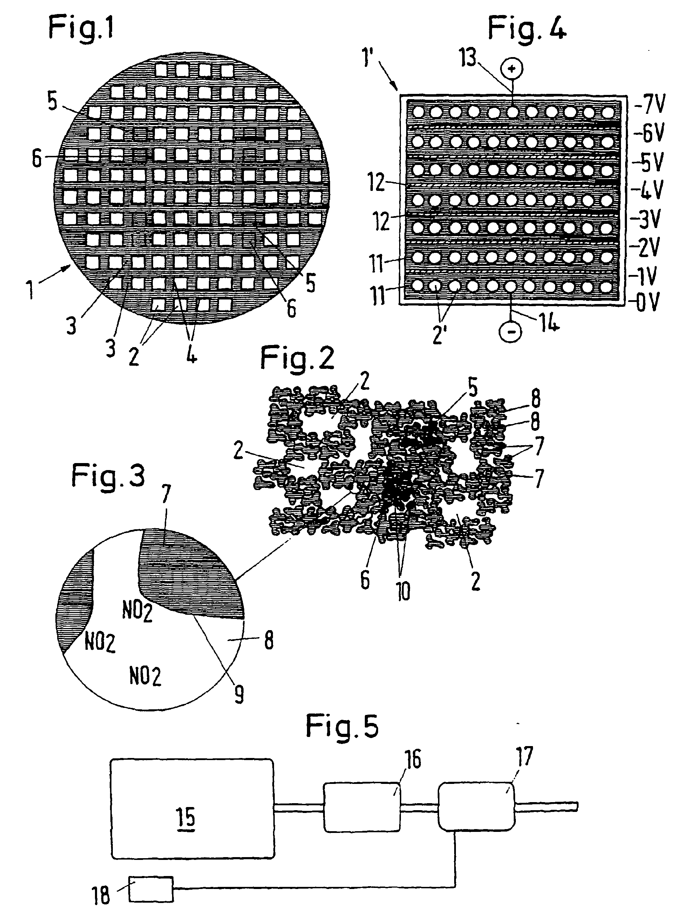

Gemäß Fig. 1 weist die Vorrichtung einen zylindrischen Absorberkörper 1 auf, der z.B. in dem Rohr einer nicht dargestellten Auspuffanlage eines Kraftfahrzeuges mit Verbrennungsmotor angeordnet sein kann. Der Absorberkörper 1 hat eine ähnliche Form wie ein Kraftfahrzeug-Oxidationskatalysator. Das heißt, er ist mit durchgehenden, also sich von einem zum anderen Ende des Zylinders erstreckenden rechteckigen Gaskanälen 2 durchzogen, durch die das zu reinigende Abgas strömt. Der Absorberkörper 1 ist porös ausgebildet. Das heißt, die porösen Zwischenwände 3 zwischen den Kanälen 2 sind mit einem alkalischen Salz getränkt, das an der Innenwand der Kanäle 2 einen dünnen Film 4 bilden. Das alkalische Salz, das beispielsweise ein Gemisch der Carbonate von Lithium, Natrium und Kalium sein kann, absorbiert das im Abgas enthaltene NOₓ als Nitrat und Nitrit, wie für NO₂ durch die vorstehende Reaktionsgleichung (1) veranschaulicht.

Das Nitrat wird anschließend elektrochemisch gemäß der Reaktionsgleichung (2) zersetzt, ebenso das Nitrit. Dazu sind im einen Teil der Kanäle 2 des Absorberkörpers 1 paarweise Elektroden, also Anoden 5 und Kathoden 6 verteilt angeordnet. Die Elektroden 5, 6 sind als Stäbe ausgebildet, die sich im wesentlichen durch den ganzen Absorberkörper 1 erstrecken. Die Anode 5 und die Kathode 6 jedes Elektrodenpaares sind dabei in benachbarten Kanälen 2 angeordnet.

Die Elektrodenstäbe 5, 6 sind an einem Ende mit einer nicht dargestellten Stromzuführung verbunden, die an die Batterie bzw. das Bordnetz des Kraftfahrzeuges angeschlossen sein kann. Der Absorberkörper 1, der z.B. durch Extrusion und anschließendes Sintern hergestellt sein kann, besteht aus einem nicht leitendem keramischen Material, beispielsweise Lithiumaluminat.

Die Sinterstruktur des aus Keramikteilchen 7 hergestellten porösen Absorberkörpers 1 ist insbesondere aus Fig. 2 ersichtlich. Die Teilchen 7 können ihrerseits eine poröse Struktur oder Mikroporösität aufweisen. Damit wird eine bimodale Porenstruktur hervorgebracht, die einerseits aus den Poren 8 zwischen den Teilchen 7 und andererseits aus den Mikroporen der Teilchen 7 besteht.

In einer solchen bimodalen Porenstruktur sind die Mikroporen der Teilchen 7 im wesentlichen ganz, die großen Poren 8 zwischen den Teilchen 7 jedoch nur zum Teil mit dem alkalischen Salz gefüllt, das einerseits das Absorptionsmittel gemäß der vorstehenden Reaktionsgleichung (1) und andererseits den Elektrolyt für die elektrochemische Zersetzung gemäß der Reaktionsgleichung (2) bildet.

Durch das nur teilweise Füllen der Poren 8 wird ein Film 9 des alkalischen Salzes an der Wand der Poren 8 erzeugt und damit eine große Absorptions- und Reaktionsoberfläche für das NOₓ im Abgas, wie in Fig. 3 dargestellt.

Die Elektroden 5, 6 können, wie in Fig. 2 veranschaulicht, ihrerseits durch Sintern von Teilchen 10 hergestellt sein und beispielsweise aus lithiiertem Nickeloxid bestehen.

Gemäß Fig. 4 besteht der Absorberkörper 1' aus einem Stapel von Schichten oder Platten 11, die aus einem porösen Elektrodenmaterial bestehen, also beispielsweise aus einem Sinterkörper aus lithiiertem Nickeloxid. Die Platten 11 sind von Gaskanälen 2' durchzogen, die sich von einem Ende des Absorberkörpers 1, an dem das zu reinigende, NOₓ-haltige Abgas eintritt, bis zum anderen Ende des Absorberkörpers 1 erstrecken, an dem das von NOₓ gereinigte Abgas austritt.

Zur Potentialtrennung ist zwischen zwei Elektrodenmaterialschichten 11 jeweils eine z.B. durch Sintern hergestellte poröse Trennschicht 12 angeordnet, die aus einem elektrisch nicht leitenden Material, beispielsweise Lithiumaluminat besteht.

Die Elektrodenmaterialschichten 11 und die Trennschichten 12 sind mit einem alkalischen Salz zur Absorption des NOₓ aus dem Abgas als Nitrat und Nitrit getränkt, das zugleich den Elektrolyt bildet und beispielsweise ein ternäres Gemisch der Carbonate von Lithium, Natrium und Kalium sein kann.

An die beiden äußeren Schichten 11 des Absorberkörpers 1' wird mittels der Stromzuführungen 13, 14 ein Potential angelegt. Die von außen angelegte Spannung wird bei Stromfluß regelmäßig auf die inneren Platten 11 aufgeteilt. Das heißt, wenn die an den beiden äußeren Platten 11 angelegte Spannung beispielsweise 7 V beträgt, beträgt die Potentialdifferenz zwischen der einen und der anderen Seite jeder Schicht 11 jeweils 1 V, wie in Fig. 4 veranschaulicht. Bei dieser Ausführungsform werden also die paarweise im Absorberkörper 1' verteilten Elektroden durch die Elektrodenmaterialschichten 11 gebildet.

Die Ausführungsform nach Fig. 4 hat u.a. den Vorteil, daß die Platten 11 und 12 leicht herstellbar sind und nur die äußeren Platten 11 kontaktiert zu werden brauchen.

Gemäß Fig. 5 ist in einer Abgasnachbehandlungsanlage dem Verbrennungsmotor 15 zuerst ein Zweiwegeoxidations-Katalysator 16 und dann die erfindungsgemäße Vorrichtung 17 zur NOₓ-Reinigung nachgeschaltet. Dadurch wird das NOₓ im Oxidationskatalysator 16 im wesentlichen zu NO₂ oxidiert, das von der alkalischen Salzschmelze, mit der der Absorber 1, 1' der erfindungsgemäße Vorrichtung 17 getränkt ist, schneller absorbiert wird als NO. Unter Umständen kann jedoch auch die Vorrichtung 17 vor dem Oxidationskatalysator 16 angeordnet sein. Mit 18 ist die Batterie bezeichnet, welche die Elektroden 5, 6 bzw. über die Stromzuführungen 13, 14 die Schichten 11 mit Strom beaufschlagt.

## Patentansprüche

1. Vorrichtung zur NOₓ-Entfernung aus dem Abgas von Verbrennungsmotoren, umfassend einen Absorberkörper (1, 1') mit darin paarweise angeordneten Elektroden (5, 6) zum Bereitstellen eines Zersetzungspotenzials, **dadurch gekennzeichnet, dass** der Absorberkörper (1, 1') porös ist und mit einem alkalischen Elektrolyten (4, 9) getränkt ist, wobei der Elektrolyt (4, 9) im Betrieb durch die Temperatur des Abgases in den flüssigen Zustand überführbar und haltbar ist und NOₓ in Form von Nitrat und Nitrit absorbiert, und das absorbierte Nitrat und Nitrit durch das Zersetzungspotenzial elektrochemisch unter Bildung von Stickstoff und Sauerstoff zersetzbar ist.

2. Vorrichtung nach Anspruch 1, **dadurch gekennzeichnet, dass** der flüssige alkalische Elektrolyt (4,9) durch eine Salzschmelze gebildet wird.

3. Vorrichtung nach Anspruch 2, **dadurch gekennzeichnet, dass** das Salz zumindest teilweise aus Alkalicarbonat besteht.

4. Vorrichtung nach Anspruch 3, **dadurch gekennzeichnet, dass** das Alkalicarbonat ein Gemisch der Carbonate von Lithium, Natrium und Kalium ist.

5. Vorrichtung nach Anspruch 3 oder 4, **dadurch gekennzeichnet, dass** das Salz ein Gemisch aus Alkali- und/oder Erdalkali-Carbonat und einem Alkali- und /oder Erdalkalinitrat und/oder -nitrit.

6. Vorrichtung nach einem der vorstehenden Ansprüche, **dadurch gekennzeichnet, dass** der Absorberkörper (1, 1') von dem NOₓ-haltigen Abgas durchströmbare Gaskanäle (2, 2') aufweist.

7. Vorrichtung nach einem der vorstehenden Ansprüchen, **dadurch gekennzeichnet, dass** der poröse Absorberkörper (1, 1') durch sintern hergestellt ist.

8. Vorrichtung nach Anspruch 7, **dadurch gekennzeichnet, dass** der Absorberkörper (1, 1') durch eine Mskroporösität aufweisende Sinterteilchen (7) eine bimodale Porenstruktur aufweist.

9. Vorrichtung nach einem der vorstehenden Ansprüche, **dadurch gekennzeichnet, dass** die mittlere Porengröße des Absorberkörpers (1, 1') höchstens 10 µm beträgt.

10. Vorrichtung nach einem der vorstehenden Ansprüche, **dadurch gekennzeichnet, dass** der Absorberkörper (1, 1') aus Lithiumaluminat, ggf. lithiiertem ceroxid oder zirkonoxid oder Lithiumzirkonat besteht.

11. Vorrichtung nach einem der vorstehenden Ansprüche, **dadurch gekennzeichnet, dass** die Elektroden (5, 6) stabförmig ausgebildet sind.

12. Vorrichtung nach Anspruch 11,**dadurch gekennzeichnet, dass** die Elektroden (5, 6) durch Sinterkörper gebildet sind.

13. Vorrichtung nach einem der Ansprüche 1 bis 9, **dadurch gekennzeichnet, dass** zur Bildung der paarweise verteilten Elektroden der Absorberkörper (1') mehrere poröse Schichten (11) aus Elektrodenmaterial aufweist, zwischen denen poröse Trennschichten (12) angeordnet sind, wobei die Elektrodenmaterialschichten (11) die vom Abgas durchströmten Gaskanäle (2') aufweisen.

14. Vorrichtung nach Anspruch 13, **dadurch gekennzeichnet, dass** die Stromzuführung (13, 14) an die beiden äußeren Elektrodenmaterialschichten (11) angeschlossen ist.

15. Vorrichtung nach einem der vorstehenden Ansprüche, **dadurch gekennzeichnet, dass** das Elektrodenmaterial Lithiumdotiertes Nickeloxid oder ein Lithiummetallit ist.

16. Vorrichtung nach einem der vorstehenden Ansprüche, **dadurch gekennzeichnet, dass** die Elektroden (5, 6) bzw. Elektrodenmaterialschichten (11) an das Bordnetz des den Verbrennungsmotor (15) aufweisenden Kraftfahrzeuges anschließbar sind.

17. Vorrichtung nach einem der Ansprüche 1 bis 15, **dadurch gekennzeichnet, dass** zur Erzeugung des zur Zersetzung des Nitrats und Nitrits notwendigen Potentials unterschiedliche Elektrodenmaterialien zur Bildung von Lokalelementen vorgesehen sind.

18. Verwendung der Vorrichtung nach einem der vorstehenden Ansprüche in einer mit einem Oxidationskatalysator (16) versehenen Abgasbehandlungsanlage eines Kraftfahrzeuges.

19. Verwendung der Vorrichtung nach einem der vorstehenden Ansprüche zur NOₓ-Entfernung aus dem Abgas von Otto-Mager- und Dieselmotoren.

## Claims

1. Device for removing NOₓ from the exhaust gas of internal combustion engines, comprising an absorber body (1, 1') having electrodes (5, 6) that are arranged in pairs therein for the provision of a decomposition potential, **characterised in that** the absorber body (1, 1') is porous and is saturated with an alkaline electrolyte (4, 9), wherein during operation as a result of the temperature of the exhaust gas it is possible to transfer the electrolyte (4, 9) into the liquid state and hold it in this state, and NOₓ is absorbed in the form of nitrate and nitrite, and the absorbed nitrate and nitrite can be decomposed electrochemically by the decomposition potential, forming nitrogen and oxygen.

2. Device according to claim 1, **characterised in that** the liquid alkaline electrolyte (4, 9) is formed by a salt melt.

3. Device according to claim 2, **characterised in that** the salt consists at least in part of alkali carbonate.

4. Device according to claim 3, **characterised in that** the alkali carbonate is a mixture of the carbonates of lithium, sodium and potassium.

5. Device according to claim 3 or 4, **characterised in that** the salt (is) a mixture of alkali and/or alkaline-earth carbonate and an alkali and/or alkaline-earth nitrate and/or nitrite.

6. Device according to one of the preceding claims, **characterised in that** the absorber body (1, 1') has gas ducts (2, 2') through which the NOₓ-containing exhaust gas can flow.

7. Device according to one of the preceding claims, **characterised in that** the porous absorber body (1, 1') is produced by sintering.

8. Device according to claim 7, **characterised in that** the absorber body (1, 1') has a bimodal pore structure as a result of sinter particles (7) that have a micro-porosity.

9. Device according to one of the preceding claims, **characterised in that** the average pore size of the absorber body (1, 1') amounts to at most 10 µm.

10. Device according to one of the preceding claims, **characterised in that** the absorber body (1, 1') consists of lithium aluminate, if applicable lithiated cerium oxide or zirconium oxide or lithium zirconate.

11. Device according to one of the preceding claims, **characterised in that** the electrodes (5, 6) are formed in a bar-shaped manner.

12. Device according to claim 11, **characterised in that** the electrodes (5, 6) are formed by sintered bodies.

13. Device according to one of claims 1 to 9, **characterised in that** in order to form the electrodes that are distributed in pairs the absorber body (1') has a plurality of porous layers (11) consisting of electrode material, between which porous separating layers (12) are arranged, with the electrode-material layers (11) having the gas ducts (2') through which the exhaust gas flows.

14. Device according to claim 13, **characterised in that** the current supply (13, 14) is connected to the two outer electrode-material layers (11).

15. Device according to one of the preceding claims, **characterised in that** the electrode material is lithium-doped nickel oxide or a lithium metallite.

16. Device according to one of the preceding claims, **characterised in that** the electrodes (5, 6) or electrode-material layers (11) can be connected to the on-board system of the motor vehicle that has the internal combustion engine (15).

17. Device according to one of claims 1 to 15, **characterised in that** in order to generate the potential that is necessary for the decomposition of the nitrate and nitrite, different electrode materials are provided in order to form local elements.

18. Use of the device according to one of the preceding claims in an exhaust-gas treatment installation of a motor vehicle that is provided with an oxidation catalytic converter (16).

19. Use of the device according to one of the preceding claims for removing NOₓ from the exhaust gas of Otto lean-mix and diesel engines.

## Revendications

1. Dispositif pour l'élimination des NOₓ dans les gaz d'échappement de moteurs à combustion interne, comprenant un corps d'absorbeur (1, 1') avec des électrodes (5, 6) disposées par paires dans ce dernier pour fournir un potentiel de décomposition, **caractérisé en ce que** le corps d'absorbeur (1, 1') est poreux et imprégné d'un électrolyte alcalin (4, 9), l'électrolyte (4, 9) pouvant être réduit et maintenu en cours de service, par la température des gaz d'échappement, à l'état fluide et absorbant les NOₓ en forme de nitrate et de nitrite, et le nitrate et le nitrite absorbés étant décomposables par voie électrochimique, par le potentiel de décomposition, en formant de l'azote et de l'oxygène.

2. Dispositif suivant la revendication 1, **caractérisé en ce que** l'électrolyte alcalin fluide (4, 9) est formé par une fusion de sel.

3. Dispositif suivant la revendication 2, **caractérisé en ce que** le sel se compose au moins en partie de carbonate alcalin.

4. Dispositif suivant la revendication 3, **caractérisé en ce que** le carbonate alcalin est un mélange des carbonates de lithium, de sodium et de potassium.

5. Dispositif suivant l'une des revendications 3 et 4, **caractérisé en ce que** le sel est un mélange de carbonate alcalin et/ou alcalino-terreux et d'un nitrate et/ou nitrite alcalin et/ou alcalino-terreux.

6. Dispositif suivant l'une des revendications précédentes, **caractérisé en ce que** le corps d'absorbeur (1, 1') comporte des canaux de gaz (2, 2') pouvant être balayés par les gaz d'échappement chargés de NOₓ.

7. Dispositif suivant l'une des revendications précédentes, **caractérisé en ce que** le corps d'absorbeur poreux (1, 1') est fabriqué par frittage.

8. Dispositif suivant la revendication 7, **caractérisé en ce que** le corps d'absorbeur (1, 1') présente une structure poreuse bimodale par des particules frittées (7) microporeuses.

9. Dispositif suivant l'une des revendications précédentes, **caractérisé en ce que** la grosseur de pores moyenne du corps d'absorbeur (1, 1') est au maximum de 10 µm.

10. Dispositif suivant l'une des revendications précédentes, **caractérisé en ce que** le corps d'absorbeur (1, 1') se compose d'aluminate de lithium, éventuellement d'oxyde de cérium dopé au lithium ou d'oxyde de zirconium ou de zirconate de lithium.

11. Dispositif suivant l'une des revendications précédentes, **caractérisé en ce que** les électrodes (5, 6) sont configurées en forme de baguettes.

12. Dispositif suivant la revendication 11, **caractérisé en ce que** les électrodes (5, 6) sont formées par des corps frittés.

13. Dispositif suivant l'une des revendications 1 à 9, **caractérisé en ce que**, pour former des électrodes réparties par paires, le corps d'absorbeur (1') comporte plusieurs couches poreuses (11) en matériau d'électrodes, entre lesquelles sont disposées des couches de séparation poreuses (12), les couches de matériau d'électrodes (11) comportant les canaux de gaz (2') balayés par les gaz d'échappement.

14. Dispositif suivant la revendication 13, **caractérisé en ce que** l'arrivée de courant (13, 14) est raccordée aux deux couches de matériau d'électrodes (11) extérieures.

15. Dispositif suivant l'une des revendications précédentes, **caractérisé en ce que** le matériau d'électrodes est de l'oxyde de nickel dopé au lithium ou un métallite de lithium.

16. Dispositif suivant l'une des revendications précédentes, **caractérisé en ce que** les électrodes (5, 6) ou les couches de matériau d'électrodes (11) peuvent être raccordées au réseau de bord du véhicule automobile équipé du moteur à combustion interne (15).

17. Dispositif suivant l'une des revendications 1 à 15, **caractérisé en ce que**, pour produire le potentiel requis pour la décomposition du nitrate et du nitrite, différents matériaux d'électrodes sont prévus pour la formation d'éléments locaux.

18. Utilisation du dispositif suivant l'une des revendications précédentes dans une installation de traitement des gaz d'échappement d'un véhicule automobile, munie d'un catalyseur d'oxydation (16).

19. Utilisation du dispositif suivant l'une des revendications précédentes pour l'élimination des NOₓ dans les gaz d'échappement de moteurs Diesel et à explosion à mélange pauvre.
